# FASCICULE DE BREVET EUROPEEN

(11) **EP 2 514 670 B1**
(45) Date de publication et mention de la délivrance du brevet: **13.11.2013**
(21) Numéro de dépôt: 12002410.4
(22) Date de dépôt: 03.04.2012
(51) Int. Cl.: B64C 27/51, B64C 27/635, B64C 27/35, B64C 27/00

(54) **Dispositif amortissant d'un rotor, rotor et aéronef associés**
Dämpfungsvorrichtung eines Rotors, Rotor und dazugehöriges Luftfahrzeug
Rotor vibration damping device, rotor and associated aircraft

(30) Priorité: 20.04.2011 FR 1101232
(43) Date de publication de la demande: 24.10.2012
(73) Titulaire: EUROCOPTER, 13725 Marignane Cédex (FR)
(72) Inventeur: Zoppitelli, Elio, 13480 Cabries (FR); Rampal, Etienne, 13004 Marseille (FR)
(74) Mandataire: GPI & Associés

(56) Documents cités:
- EP-A1- 1 767 452
- FR-A1- 2 373 445
- US-A- 4 297 078
- US-A- 5 372 478
- US-A1- 2009 180 882

## Description

La présente invention concerne un dispositif amortissant d'un rotor, ainsi qu'un rotor et un aéronef associés.

L'invention concerne notamment les rotors de giravions comportant un moyeu entraîné en rotation selon un axe de rotation par un arbre de sortie d'une boîte de transmission de puissance, ainsi qu'une pluralité de pales fixées au moyeu par l'intermédiaire d'articulations appropriées. De tels rotors sont dits « rotors articulés ».

Les oscillations de chaque pale autour de son axe de traînée peuvent se coupler de façon instable avec les mouvements ou les modes de déformations élastiques de la cellule, les oscillations d'une pale en traînée résultant de la réponse naturelle et de la réponse forcée de cette pale. En particulier, les oscillations de l'hélicoptère posé au sol sur ses atterrisseurs et rotor tournant peuvent être à l'origine du phénomène connu sous l'expression « résonance au sol ».

En effet, lors d'une excitation des pales d'un rotor en traînée selon leurs réponses naturelle et forcée, les pales sont écartées de leur position d'équilibre et peuvent se répartir inégalement en direction circonférentielle. Il en résulte la création d'un balourd par déplacement du centre de gravité du rotor hors de l'axe de rotation de ce dernier.

En effet, les pales écartées de leur position d'équilibre oscillent autour de cette position à une fréquence ω_{δ}, qui est la fréquence propre des pales dans leur mouvement en traînée, appelé également premier mode de traînée ou mode propre de vibration en traînée. Cette fréquence ω_{δ} est relative à un système d'axes tournants, liés au rotor, selon les définitions ultérieures

Si Ω est la fréquence de rotation du rotor, il est connu que le fuselage de l'hélicoptère est ainsi excité aux fréquences |Ω+ω_{δ}|.

Posé sur le sol par son train d'atterrissage, le fuselage de l'hélicoptère constitue un système à masse suspendue au dessus du sol par un ressort et un amortisseur au niveau de chaque atterrisseur. Le fuselage reposant sur son train d'atterrissage a donc des modes propres de vibration en roulis et en tangage. Il y a risque d'instabilité au sol lorsque la fréquence d'excitation du fuselage sur son train d'atterrissage est voisine de la fréquence propre d'oscillation |Ω+ω_{δ}| ou |Ω-ω_{δ}| ce qui correspond au phénomène dénommé résonance sol.

Généralement, ce phénomène n'intervient qu'en présence de la seule fréquence propre d'oscillation |Ω-ω_{δ}| dite régressive, relative au mode propre de vibration en traînée dit régressif des pales. Cette fréquence propre d'oscillation est relative à un système d'axes fixes lié au giravion comme expliqué par la suite.

Pour éviter l'instabilité, il est connu de rechercher d'abord à éviter le croisement de ces fréquences, et/ ou, notamment si ce croisement est prévu, il est connu d'amortir suffisamment le fuselage sur son train d'atterrissage et/ ou les pales du rotor principal dans leur mouvement de traînée. Il est aussi possible de rechercher un croisement de ces fréquences à faible régime.

Par ailleurs, on constate en vol d'autres possibilités de croissement de fréquences amenant un phénomène de résonance à des niveaux d'énergie moindre, connu sous l'expression « résonance air »

On connaît dès lors des dispositifs pour éviter les instabilités précitées en vol ou partiellement au sol rotor tournant, ces dispositifs n'étant finalement utiles que durant des phases de fonctionnement du rotor restreintes.

Par exemple, selon le document FR 2 629 163 il est possible d'agencer une contre-fiche de rappel élastique sur un rotor, ces contre-fiches pouvant être relativement complexes.

Selon le document EP 0 340 095, on dispose un amortisseur à rappel élastique entre deux pales adjacentes d'un rotor.

Le document EP 0 742 144 suggère d'utiliser un amortisseur de trainées relié à une pale ainsi qu'à une pale adjacente et au moyeu du rotor via de multiples leviers.

Le document FR 2 890 937 et le document EP 1 767 452 ont pour objet un rotor de giravion muni d'un système d'amortissement en traînée fixé à une saillie latérale de chaque pale par une rotule proche de la bielle de pas de la pale.

Le document EP 2 233 397 présente un dispositif actif agissant sur l'angle de traînée d'une pale.

Il est à noter que les dispositifs mettant en oeuvre une pluralité d'amortisseurs coopérant avec les pales d'un rotor peuvent nécessiter un appairage. En effet, on comprend qu'il est difficile voire impossible de fabriquer des amortisseurs strictement identiques. Dès lors, si les amortisseurs d'un dispositif possèdent des caractéristiques relativement éloignées, ces amortisseurs peuvent être à l'origine de la création d'un balourd.

L'homme du métier tend alors parfois à appairer les amortisseurs pour réduire ce risque.

En outre, les amortisseurs sont sollicités en régime dynamique de sorte qu'ils sont soumis à un échauffement, ce qui réduit leur efficacité et leur durée de vie.

Ainsi, le mouvement des pales d'un rotor articulé de giravion tend à déplacer le centre de gravité de ce rotor pendant chaque révolution. Un tel déplacement est dû à un mouvement en traînée des pales sous l'effet de la réponse naturelle des pales à un choc et de la réponse forcée des pales à une sollicitation se produisant selon une fréquence donnée. Pour éviter l'apparition rare de phénomènes destructeurs de type résonance sol ou résonance air par exemple, l'état de la technique inclut alors des dispositifs passifs relativement compliqués ou des dispositifs actifs nécessitant de fait un apport d'énergie.

Par ailleurs, on connaît le document GB947 683 qui met en oeuvre des actionneurs agissant sur le déplacement des pales.

On connaît aussi les documents US 5 372 478, qui décrit toutes les caractéristiques du préambule de la revendication 1, US 4 297 078, FR 2 373 445, et US 2009/180882.

La présente invention a alors pour objet de proposer un dispositif simple pour notamment limiter les risques d'apparition du phénomène de résonance sol voire du phénomène de résonance air.

Selon l'invention, un dispositif amortissant d'un rotor est muni d'un anneau tournant et d'une pluralité de leviers, chaque levier s'étendant d'une première extrémité liée audit anneau par une première liaison mécanique vers une deuxième extrémité apte à être articulée à une pale.

Ainsi, lorsque le dispositif amortissant est installé sur un rotor, l'anneau est solidaire en rotation des pales du rotor autour d'un axe de rotation de ce rotor. On comprend donc que l'on qualifie un élément à l'aide de l'adjectif « tournant » un élément entraîné en rotation. Un élément tournant est par exemple solidaire d'un repère tournant lié au rotor alors qu'un élément non tournant est solidaire d'un repère fixe lié à une structure, la structure qui porte le rotor de l'aéronef par exemple.

Ce dispositif amortissant est notamment remarquable en ce qu'il comporte un moyen d'amortissement non tournant qui est solidarisé à un moyen de fixation non tournant ainsi qu'à un organe non tournant d'une interface, cette interface étant interposée entre le moyen d'amortissement non tournant et l'anneau pour convertir un mouvement rotatif en traînée d'au moins une pale en un mouvement translatif sollicitant ledit moyen d'amortissement.

Dès lors, un unique moyen d'amortissement travaille dans un repère fixe et non pas dans le repère tournant d'un rotor muni du dispositif amortissant, ce moyen d'amortissement étant sollicité par une interface effectuant un déplacement translatif.

En mettant en oeuvre un unique moyen d'amortissement relié à toutes les pales et non pas une pluralité d'amortisseurs, l"invention n'est pas concernée par les problèmes d'appariement évoqués précédemment.

Par ailleurs, lorsque le dispositif amortissant est agencé sur un rotor, les mouvements en traînée des pales sont communiqués à l'anneau par les leviers du dispositif amortissant, cet anneau possédant deux degrés de liberté en translation et un degré de liberté en rotation autour de l'axe de rotation du rotor. L'anneau communique son mouvement translatif à l'interface qui sollicite le moyen d'amortissement uniquement en translation.

Les mouvements alternés de traînée des pales résultant de la réponse forcée des pales modulées une fois par tour et dite en général en « 1Ω » sont convertis en un déplacement quasi-statique de l'organe non tournant de l'interface et de fait du moyen d'amortissement. Ce moyen d'amortissement réagit en générant un effort, proportionnel à sa raideur statique.

Dès lors, l'effort généré par le moyen d'amortissement sollicité par des mouvements alternés en 1 Ω ne présente pas de composante dissipative d'énergie mais une composante élastique proportionnelle à la raideur statique du moyen d'amortissement et non pas à la raideur dynamique de ce moyen d'amortissement.

La sollicitation statique du moyen d'amortissement ne provoque pas son échauffement contrairement à certains amortisseurs mis en oeuvre par l'état de la technique antérieure.

Il est alors possible de mettre en oeuvre un moyen d'amortissement très raide sur des hélicoptères lourds par exemple, à propos desquels une plus grande conicité accentue les mouvements de traînée. Une telle mise en oeuvre est favorable pour s'affranchir des risques d'apparition du phénomène de résonance sol dans un tel cas.

En outre, les mouvements en traînée des pales correspondant à la réponse naturelle des pales sont convertis en un mouvement de translation sur une trajectoire circulaire à la pulsation du mode propre de vibration régressif en traînée des pales. Par suite, ces mouvements en traînée correspondant à la réponse naturelle des pales sont amortis par le moyen d'amortissement, la fréquence propre des pales étant alors affectée.

Ainsi, l'invention met en oeuvre un unique moyen d'amortissement pour l'ensemble des pales d'un rotor, un mouvement non collectif des pales en traînée tendant à translater ce moyen d'amortissement dans un plan via un anneau et une interface. En étant sollicité par ladite interface, le moyen d'amortissement apporte une raideur statique et un amortissement au mouvement de traînée des pales, la raideur statique étant apportée suite à un mouvement de traînée des pales généré par la réponse forcée de ces pales à une sollicitation se produisant à la fréquence de rotation du rotor, l'amortissement du moyen d'amortissement étant apporté suite à un mouvement de traînée des pales généré par la réponse naturelle de ces pales à un choc. De plus, le moyen d'amortissement modifie la fréquence propre du mouvement en traînée des pales et permet ainsi l'adaptation dynamique du rotor à la dynamique de la structure sur ses atterrisseurs.

Le dispositif amortissant peut aussi comporter une ou plusieurs des caractéristiques additionnelles qui suivent.

Par exemple, l'interface comporte un roulement muni d'une première cage solidaire en rotation dudit anneau et d'une deuxième cage non tournante représentant ledit organe non tournant solidaire dudit moyen d'amortissement, des organes roulants étant disposés entre ladite première cage et ladite deuxième cage. Les organes roulants comportent par exemple des billes ou encore des rouleaux.

Par suite, un mouvement rotatif de l'anneau autour de l'axe de rotation d'un rotor n'est pas transmis à l'organe non tournant de l'interface et donc au moyen d'amortissement. A l'inverse, un mouvement translatif de l'anneau est transmis à l'organe non tournant de l'interface et donc au moyen d'amortissement.

En outre, on note que le moyen d'amortissement comporte selon un aspect de l'invention un organe viscoélastique. Par exemple, le moyen d'amortissement est muni d'une ou plusieurs couches de matériaux à base d'élastomères travaillant en cisaillement entre l'organe non tournant de l'interface et le moyen de fixation non tournant.

A titre de variante, le moyen amortissant comprend un système à frottement ou encore un système hydraulique par exemple, voire magnéto-rhéologique .

Selon une variante, le moyen d'amortissement comprend au moins une couronne amortissante, cette couronne étant disposée entre l'interface et le moyen de fixation non tournant, chaque couronne étant favorablement centrée sur l'axe de rotation d'un rotor.

De plus, chaque couronne peut être parallèle à l'anneau du dispositif amortissant et à un plan de fixation des pales d'un rotor. On note que l'on appelle par commodité « plan de fixation » le plan contenant les articulations de la pale au moyeu d'un rotor.

Par exemple, le moyen d'amortissement comprend une couronne supérieure et une couronne inférieure agencées de part et d'autre de l'anneau du dispositif amortissant en élévation, la couronne supérieure étant à l'aplomb de cet anneau.

Le moyen amortissant présente alors un équilibre optimisé.

Selon un autre aspect, au moins une liaison mécanique comprend un bras saillant radialement de l'anneau pour favoriser l'agencement du levier.

De plus, au moins une liaison mécanique comprend une bielle articulée à l'anneau et un organe basculant articulé à cette bielle et à la première extrémité d'un levier. Si l'anneau est agencé dans un plan parallèle au plan de fixation des pales, l'organe basculant peut s'étendre en élévation pour relier un levier agencé dans le plan de fixation à un anneau agencé dans un plan distinct du plan de fixation.

Outre un dispositif amortissant, l'invention vise un rotor muni d'un moyeu portant une pluralité de pales en rotation autour d'un axe de rotation en élévation, les pales étant articulées au moyeu par des articulations agencées dans un plan de fixation, ce rotor comprenant un dispositif amortissant selon l'invention.

Ainsi, le rotor inclut un dispositif amortissant muni d'un anneau tournant autour de l'axe de rotation du rotor et d'un levier par pale, chaque levier s'étendant d'une première extrémité liée à l'anneau par une première liaison mécanique vers une deuxième extrémité articulée à une pale, ce dispositif amortissant comportant un moyen d'amortissement non tournant autour de l'axe de rotation, le moyen d'amortissement étant solidarisé à un moyen de fixation non tournant et à un organe non tournant d'une interface, l'interface étant interposée entre le moyen d'amortissement et l'anneau pour convertir un mouvement rotatif d'au moins une pale en un mouvement translatif sollicitant ce moyen d'amortissement.

Ce rotor peut aussi posséder une ou plusieurs des caractéristiques qui suivent.

Par exemple, l'anneau est éventuellement parallèle au plan de fixation des pales.

Selon un autre aspect, ledit moyeu comportant un plateau supérieur et un plateau inférieur pour porter les pales dans le plan de fixation, cet anneau est agencé dans ledit plan de fixation. L'anneau est alors agencé à l'intérieur du moyeu entre le plateau supérieur et le plateau inférieur. De même, le moyen amortissant peut être disposé entre le plateau supérieur et le plateau inférieur.

Par ailleurs le moyen d'amortissement est favorablement centré sur l'axe de rotation dudit rotor.

En outre, l'invention vise un aéronef comportant une cellule et un rotor muni d'un moyeu portant une pluralité de pales en rotation autour d'un axe de rotation en élévation, les pales étant articulées au moyeu par des articulations agencées dans un plan de fixation, ce rotor étant du type décrit précédemment.

Ainsi le rotor inclut un dispositif amortissant selon l'invention muni d'un anneau tournant autour de l'axe de rotation et d'un levier par pale, chaque levier s'étendant d'une première extrémité liée audit anneau par une première liaison mécanique vers une deuxième extrémité articulée à une pale, ce dispositif amortissant comportant un moyen d'amortissement non tournant solidarisé à un moyen de fixation non tournant fixé à la cellule et à un organe non tournant d'une interface, l'interface étant interposée entre le moyen d'amortissement et l'anneau pour convertir un mouvement rotatif d'au moins une pale en un mouvement translatif dans un plan parallèle au plan de fixation sollicitant ledit moyen d'amortissement. On entend par « plan parallèle au plan de fixation » soit un plan confondu avec le plan de fixation soit un plan distinct et parallèle à ce plan de fixation.

Eventuellement, la cellule comporte une boîte de transmission de puissance entraînant le moyeu en rotation autour de l'axe de rotation, par exemple la boîte de transmission de puissance dite « principale » d'un giravion. Le moyen de fixation peut alors être muni d'une canne fixée à un carter de cette boîte de transmission de puissance.

L'invention et ses avantages apparaîtront avec plus de détails dans le cadre de la description qui suit avec des exemples de réalisation donnés à titre illustratif en référence aux figures annexées qui représentent :
- la figure 1, une vue de dessus d'une première réalisation de l'invention,
- les figures 2 et 3, des schémas explicitant le fonctionnement de l'invention,
- la figure 4, une coupe de la figure 1,
- les figures 5 et 6 des vues présentant une variante la liaison mécanique reliant un levier à un anneau,
- les figure 7 et 8, une vue de dessus et une coupe d'une deuxième réalisation de l'invention, et
- la figure 9, une coupe d'une variante de l'invention.

On note que trois directions X, Y et Z orthogonales les unes par rapport aux autres sont représentées sur les figures.

La première direction X est dite longitudinale. Le terme « longitudinal » est relatif à toute direction parallèle à la première direction X.

La deuxième direction Y est dite transversale. Le terme « transversal » est relatif à toute direction parallèle à la deuxième direction Y.

Enfin, la troisième direction Z est dite en élévation. L'expression « en élévation » est relative à toute direction parallèle à la troisième direction Z.

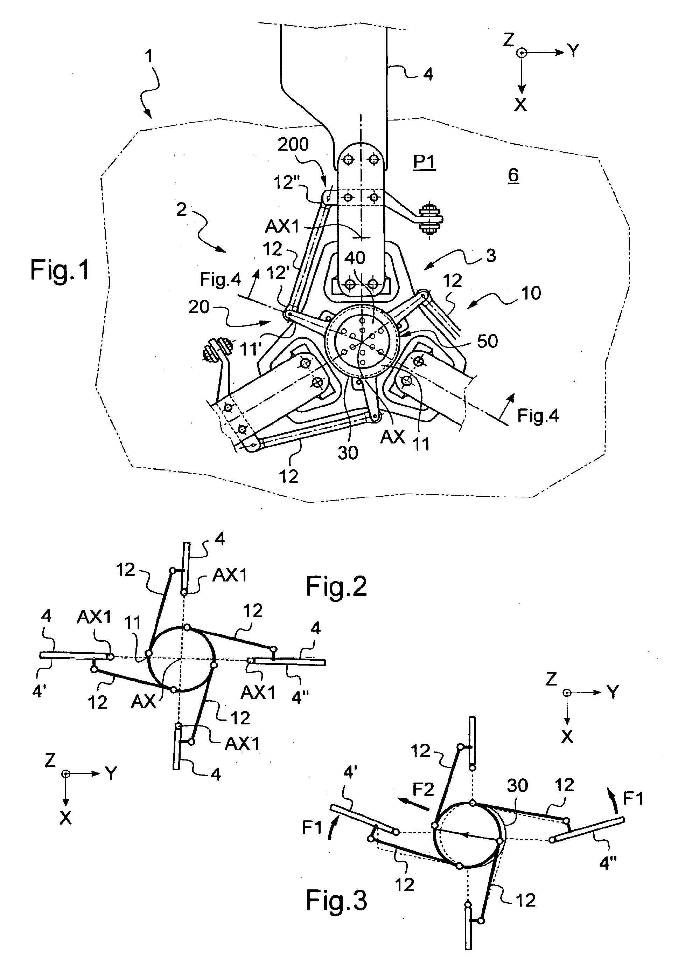

La figure 1 présente un aéronef 1 muni d'une cellule 6 et d'un rotor 2, à savoir un rotor articulé. Pour des raisons évidentes de simplification du dessin, la cellule est représentée de manière extrêmement schématique.

Le rotor 2 est alors pourvu d'un moyeu 3 portant une pluralité de pales 4, chaque pale 4 étant articulée au moyeu 2 par une articulation usuelle. Les articulations des pales 4 définissent un plan dénommé plan de fixation P1 par commodité.

Le moyeu 3 entraîne alors les pales 4 en rotation autour d'un axe de rotation AX. De plus, lors de son mouvement rotatif autour de l'axe de rotation, chaque pale peut effectuer une rotation autour d'un axe de traînée AX1, le mouvement en traînée des pales pouvant générer un balourd du rotor susceptible d'être à l'origine d'un phénomène de résonance sol ou d'un phénomène de résonance air, par exemple.

Dès lors, le rotor 2 est pourvu d'un dispositif amortissant 10 pour au moins minimiser les risques d'apparition des phénomènes précités.

Ce dispositif amortissant 10 comprend un anneau 11 relié à chaque pale 4 par un levier 12. En effet, chaque levier s'étend d'une première extrémité 12' articulée par une première liaison mécanique 20 à l'anneau 11 vers une deuxième extrémité 12" articulée par une deuxième liaison mécanique 200 à une pale 4. Par exemple, la deuxième liaison mécanique est munie d'une rotule fixée à une attache d'une pale, cette deuxième liaison mécanique étant déportée par rapport à l'axe de traînée AX1 autour duquel la pale 4 effectue un mouvement en traînée.

L'anneau est alors capable d'un degré de liberté en rotation et de deux degrés de liberté en translation dans un plan parallèle au plan de fixation P1, à savoir parallèle au plan de fixation P1 ou confondu avec le plan de fixation P1.

Pour au moins réduire les risques de voir apparaître un phénomène de résonance sol ou de résonance air par exemple, le dispositif amortissant 10 comportent un moyen amortissant 30 non visible sur la figure 1 commun à toutes les pales, et donc pas un moyen amortissant par pale ou une pluralité de moyens amortissant interpales.

Le moyen amortissant 30 ne possède pas de degré de liberté en rotation. En effet, en étant fixé à un moyen de fixation 40 non tournant solidaire de la cellule 6, le moyen amortissant 30 est un moyen non tournant, contrairement à l'anneau 11.

Dès lors, le dispositif amortissant 10 inclut une interface 50 interposée entre l'anneau 11 et le moyen amortissant 30, l'interface 50 ayant un organe tournant solidaire de l'anneau 11 et un organe non tournant solidaire du moyen amortissant 30.

Par suite, si les pales effectuent toutes le même mouvement en traînée alors les leviers 12 mettent en rotation l'anneau 11 autour de son axe de symétrie. Ce mouvement rotatif collectif des pales n'engendre alors pas une rotation du moyen amortissant 30 qui n'est de fait pas sollicité.

A l'inverse, en référence aux figures 2 et 3, si les pales 4 effectuent des mouvements en traînée distincts alors les leviers 12 induisent une translation de l'anneau 11. Le mouvement rotatif des pales 4 en traînée est alors convertit un mouvement translatif sollicitant le moyen amortissant 30. Ce moyen amortissant 30 apporte alors de la raideur et/ ou de l'amortissement pour au moins réduire les risques de voir apparaître un phénomène de résonance sol ou de résonance air par exemple.

Par exemple, en référence à la figure 3, si la pale avançante 4' et la pale reculante 4" effectuent un mouvement en traînée selon les flèches F1 et si les autres pales sont dans leur position médiane, deux pales effectuent de fait des mouvements en traînée distincts. Il en résulte une translation de l'anneau 11 selon la flèche F2 sollicitant le moyen amortissant 30.

Il est à noter que l'on entend alors par « convertir un mouvement rotatif d'une pale transmis à un levier en un mouvement translatif », la conversion d'un mouvement rotatif en traînée non collectif des pales d'un rotor, deux pales distinctes du rotor effectuant deux mouvements en traînée différents.

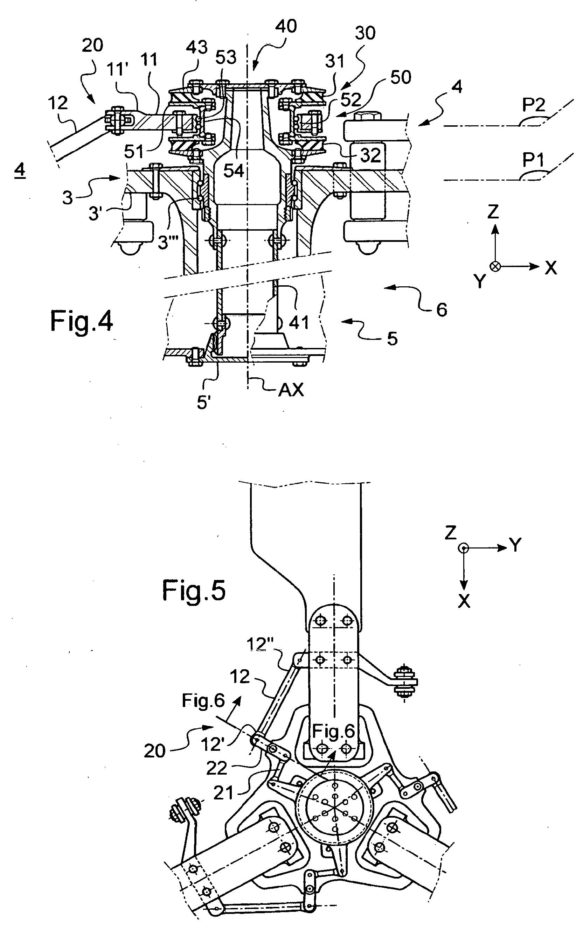

La figure 4 présente une coupe de la figure 1 explicitant un premier mode de réalisation du dispositif amortissant, et de fait du rotor et de l'aéronef associés.

En référence à cette figure 4, l'interface 50 comprend un roulement muni d'une première cage 52 et d'une deuxième cage 54 entre lesquelles évoluent des organes roulants 53. Par exemple, le roulement est un roulement à billes ou à rouleaux.

La première cage 52 représente alors l'organe tournant de l'interface 50 solidaire de l'anneau 11, la deuxième cage 54 étant solidaire de l'organe non tournant 51 solidarisé à un moyen d'amortissement 30.

Dès lors, le moyen d'amortissement comprend au moins une couche de matière amortissante, telle qu'une matière viscoélastique appartenant au groupe des élastomères par exemple.

Par exemple, le moyen amortissant 30 inclut au moins une couronne 31, 32 en élastomère, parallèle à l'anneau 11, chaque couronne étant solidarisée à la deuxième cage 54 et un moyen de fixation 40 non tournant

Selon l'exemple représenté, le moyen amortissant 30 peut posséder une couronne supérieure 31 et une couronne inférieure 32 agencées de part et d'autre de l'anneau 11 en élévation, la couronne supérieur 31 étant à l'aplomb de l'anneau 11, cet anneau 11 étant à l'aplomb de la couronne inférieure 32. cette configuration permet de bien équilibrer le dispositif amortissant 10 afin que ce dispositif amortissant ne soit lui-même pas à l'origine d'un balourd.

Selon un autre aspect, on note qu'il est intéressant de centrer le moyen amortissant sur l'axe de rotation AX du rotor, par exemple en centrant chaque couronne de ce moyen amortissant sur l'axe de rotation AX.

Par ailleurs, afin de ne pas être mis en rotation, notamment autour de l'axe de rotation AX du rotor 2, l'organe de fixation 40 est solidarisé à la cellule 6.

Cette cellule 6 étant munie d'une boîte de transmission de puissance 5 interposée entre une installation motrice et le rotor 2, l'organe de fixation 40 est favorablement pourvu d'une canne 41 attachée au carter 5' de la boîte de transmission de puissance 5. Par exemple, la canne 41 de l'organe de fixation 40 est solidarisée au fond de la boîte de transmission de puissance 5.

Cette canne 41 traverse alors au moins un plateau 3' du moyeu 3 pour atteindre la cellule 6, un roulement à billes ou à rouleaux 3"' étant par exemple interposé entre le plateau traversé et la canne 41.

De plus, cette canne 41 comporte des épaulements 42, 43 solidarisés aux couronnes 31, 32 du moyen amortissant 30, lesdites couronnes entourant la canne 41.

On note que la canne 41 peut comporter plusieurs organes, à l'instar de la variante représentée.

Selon un autre aspect, chaque première liaison mécanique 20 reliant la première extrémité 12' d'un levier à l'anneau 11 peut comprendre un bras saillant 11' de l'anneau 11.

Selon une première variante représentée notamment sur les figures 1 et 4, la première liaison mécanique inclut une unique rotule pour lier la première extrémité 12' d'un levier à l'anneau 11, une rotule coopérant avec cette première extrémité 12' et un bras saillant 11' de l'anneau 11 par exemple.

En référence à la figure 4, lorsque l'anneau est contenu dans un plan P2 parallèle au plan de fixation P1 mais distinct du plan de fixation P1, le levier 12 peut alors présenter une inclinaison.

En référence à la figure 5, la première liaison mécanique 20 peut alors comprendre un organe basculant 22 articulé par exemple par une rotule à la première extrémité 12' d'un levier 12, ainsi qu'une bielle 21 articulée à l'organe basculant 22 et à l'anneau 11 respectivement par deux rotules par exemple.

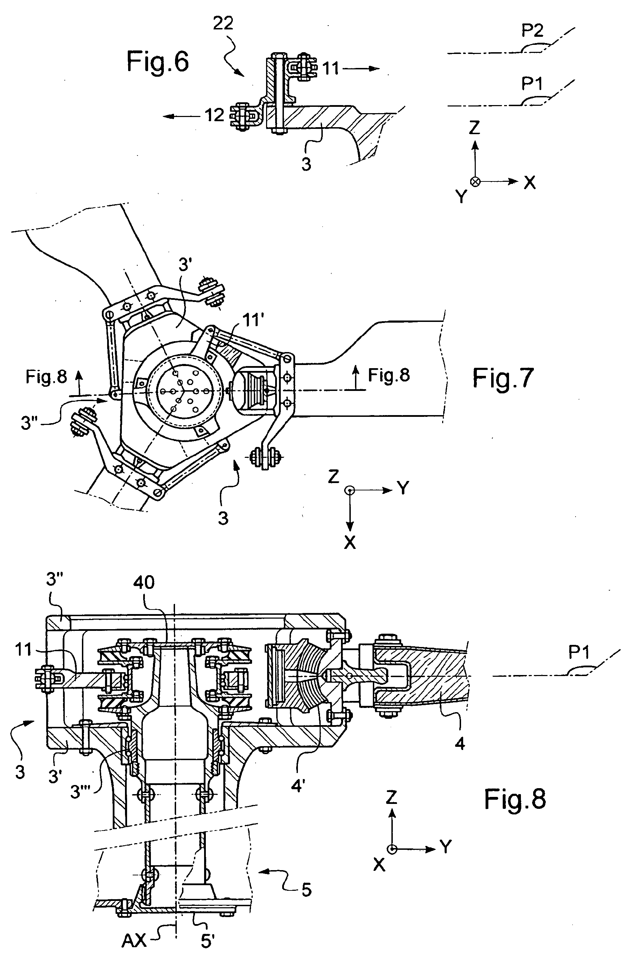

Conformément à la figure 6, l'organe basculant 22 peut être agencé sur un pion du moyeu 3, cet organe basculant 22 s'étendant selon une direction en élévation sensiblement perpendiculaire au plan de fixation P1 et au plan P2 contenant l'anneau 11.

Par ailleurs, le moyeu 3 peut comprendre un unique plateau à l'aplomb duquel est disposé l'anneau 11 du dispositif amortissant.

Cependant, en référence aux figures 7 et 8 et notamment à la figure 8, ce moyeu 3 peut posséder un plateau inférieur 3' et un plateau supérieur 3" entre lesquels sont disposées les articulations de fixation 4' des pales 4 définissant un plan de fixation P1.

L'anneau 11 peut alors être agencé dans le plan de fixation P1 à l'intérieur du moyeu 3, des bras 11' de l'anneau 11 saillant du moyeu 3 par des ouvertures latérales pour rejoindre les leviers 12.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. La plupart des figures ont illustré une réalisation pour un rotor équipé de trois pales. Il est bien évident que la présente invention s'applique quel que soit le nombre de pales. Il est bien sûr envisageable de remplacer un moyen décrit par un moyen équivalent sans sortir du cadre de la présente invention.

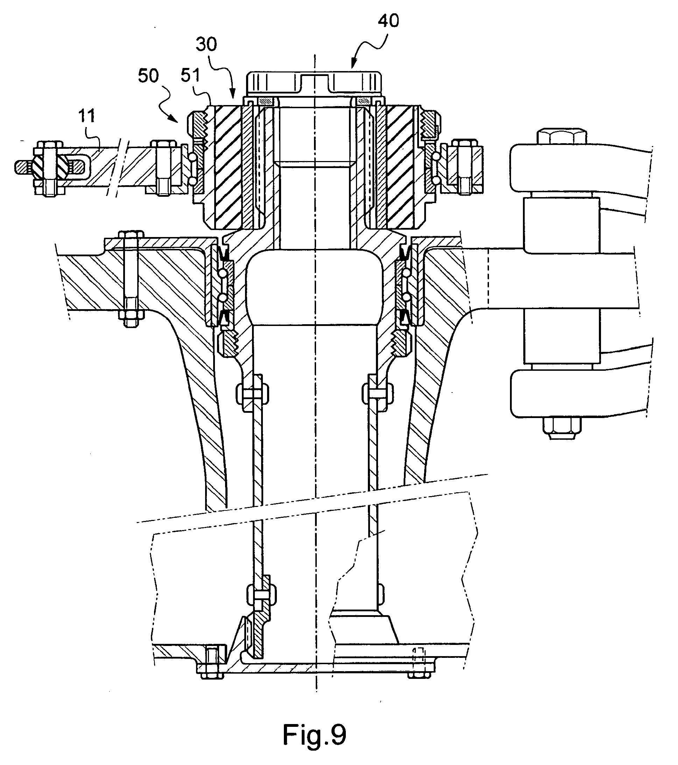

En outre, les figures 4 et 8 présentent des moyens d'amortissement de forme annulaire. Toutefois, en référence à la figure 9, le moyen d'amortissement peut avoir une forme cylindrique.

## Revendications

1. Dispositif amortissant (10) d'un rotor (2) muni d'un anneau (11) tournant et d'une pluralité de leviers (12), chaque levier (12) s'étendant d'une première extrémité (12') liée audit anneau (11) par une première liaison mécanique (20) vers une deuxième extrémité (12") apte à être articulée à une pale (4),
**caractérisé en ce que** ledit dispositif amortissant (10) comporte un moyen d'amortissement (30) non tournant solidarisé à un moyen de fixation (40) non tournant et à un organe non tournant (51) d'une interface (50), ladite interface (50) étant interposée entre ledit moyen d'amortissement (30) non tournant et ledit anneau (11) pour convertir un mouvement rotatif en traînée d'une pale (4) transmis à un levier (12) en un mouvement translatif sollicitant ledit moyen d'amortissement (30).

2. Dispositif amortissant selon la revendication 1,
**caractérisé en ce que** ladite interface (50) comporte un roulement muni d'une première cage (52) solidaire en rotation dudit anneau (11) et d'une deuxième cage (54) non tournante représentant ledit organe non tournant (51) solidaire dudit moyen d'amortissement (30), des organes roulants (53) étant disposés entre ladite première cage (52) et ladite deuxième cage (54).

3. Dispositif amortissant selon l'une quelconque des revendications 1 à 2,
**caractérisé en ce que** ce ledit moyen d'amortissement (30) comporte au moins un organe viscoélastique (31, 32).

4. Dispositif amortissant selon l'une quelconque des revendications 1 à 3,
**caractérisé en ce que** ledit moyen d'amortissement (30) comprend au moins une couronne (31, 32) amortissante, ladite couronne (31, 32) étant disposée entre ladite interface (50) et ledit moyen de fixation non tournant (40).

5. Dispositif amortissant selon la revendication 4,
**caractérisé en ce que** ladite couronne (31, 32) est parallèle audit anneau (11).

6. Dispositif amortissant selon l'une quelconque des revendications 4 à 5,
**caractérisé en ce que** ledit moyen d'amortissement (30) comprend une couronne supérieure (31) et une couronne inférieure (32) agencées de part et d'autre dudit anneau (11) en élévation, ladite couronne supérieure (31) étant à l'aplomb dudit anneau (11).

7. Dispositif amortissant selon l'une quelconque des revendications 1 à 6,
**caractérisé en ce qu'**au moins une liaison mécanique (20) comprend un bras (11') saillant radialement dudit anneau (11).

8. Dispositif amortissant selon l'une quelconque des revendications 1 à 7,
**caractérisé en ce que** ce qu'au moins une liaison mécanique (20) comprend une bielle (21) articulée audit anneau (11) et un organe basculant (22) articulé à ladite bielle (21) et à la première extrémité (12') d'un levier (12).

9. Rotor (2) muni d'un moyeu (3) portant une pluralité de pales (4) en rotation autour d'un axe de rotation (AX) en élévation, les pales étant articulées au moyeu par des articulations agencées dans un plan de fixation (P1),
**caractérisé en ce que** ledit rotor (2) inclut un dispositif amortissant (10) selon l'une quelconque des revendications 1 à 8 muni d'un anneau (11) tournant autour dudit axe de rotation (AX) et d'un levier (12) par pale (4), chaque levier (12) s'étendant d'une première extrémité (12') liée audit anneau (11) par une première liaison mécanique (20) vers une deuxième extrémité (12") articulée à une pale, ledit dispositif amortissant comportant un moyen d'amortissement (30) non tournant autour dudit axe de rotation (AX) solidarisé à un moyen de fixation (40) non tournant et à un organe non tournant (51) d'une interface (50), ladite interface (50) étant interposée entre ledit moyen d'amortissement (30) et ledit anneau (11) pour convertir un mouvement rotatif en traînée d'au moins une pale (4) en un mouvement translatif sollicitant ledit moyen d'amortissement (30).

10. Rotor selon la revendication 9,
**caractérisé en ce que** ledit anneau (11) est parallèle audit plan de fixation (P1).

11. Rotor selon l'une quelconque des revendications 9 à 10,
**caractérisé en ce que** ledit moyeu (3) comportant un plateau supérieur (3") et un plateau inférieur (3') pour porter les pales (4) dans le plan de fixation (P1), ledit anneau (11) est agencé dans ledit plan de fixation (P1).

12. Rotor selon la revendication 9,
**caractérisé en ce que** ledit moyen d'amortissement est centré sur l'axe de rotation (AX) dudit rotor.

13. Aéronef (1) comportant une cellule (6) et un rotor (2) muni d'un moyeu (3) portant une pluralité de pales (4) en rotation autour d'un axe de rotation (AX) en élévation, les pales étant articulées au moyeu par des articulations agencées dans un plan de fixation (P1),
**caractérisé en ce que** ledit rotor (2) inclut un dispositif amortissant (10) selon l'une quelconque des revendications 1 à 8 muni d'un anneau (11) tournant autour dudit axe de rotation (AX) et d'un levier (12) par pale (4), chaque levier (12) s'étendant d'une première extrémité (12') liée audit anneau (11) par une première liaison mécanique (20) vers une deuxième extrémité (12") articulée à une pale (4), ledit dispositif amortissant (10) comportant un moyen d'amortissement (30) non tournant solidarisé à un moyen de fixation (40) non tournant fixé à ladite cellule (6) et à un organe non tournant (51) d'une interface (50), ladite interface (50) étant interposée entre ledit moyen d'amortissement (30) et ledit anneau (11) pour convertir un mouvement rotatif en traînée d'au moins une pale (4) en un mouvement translatif dans un plan parallèle au plan de fixation (P1).

14. Aéronef selon la revendication 13,
**caractérisé en ce que** ladite cellule (6) comporte une boîte de transmission de puissance (5) entraînant ledit moyeu (3) en rotation autour dudit axe de rotation (AX), ledit moyen de fixation (40) comprenant une canne (41) fixée à un carter (5') de ladite boîte de transmission de puissance (5).

## Patentansprüche

1. Dämpfungsvorrichtung (10) eines Rotors (2) mit einem sich drehenden Ring (11) und einer Mehrzahl von Hebeln (12), wobei jeder Hebel (12) sich von einem ersten Ende (12'), welches über eine mechanische Verbindung (20) mit dem Ring (11) verbunden ist, auf ein zweites Ende (12") zu erstreckt, welches an ein Rotorblatt (4) angelenkt werden kann,
**dadurch gekennzeichnet, dass** die Dämpfungsvorrichtung (10) ein sich nicht drehendes Dämpfungsmittel (30) aufweist, das mit einem sich nicht drehenden Befestigungsmittel (40) und mit einem sich nicht drehenden Organ (51) eines Zwischengliedes (50) fest verbunden ist, wobei das Zwischenglied (50) zwischen dem sich nicht drehenden Dämpfungsmittel (30) und dem Ring (11) angeordnet ist, um eine schleppende Drehbewegung eines Rotorblatts (4), die an einen Hebel (12) übertragen wird, in eine Translationsbewegung umzuwandeln, mit der das Dämpfungsmittel (30) beaufschlagt wird.

2. Dämpfungsvorrichtung nach Anspruch 1,
**dadurch gekennzeichnet, dass** das Zwischenglied (50) ein Wälzlager aufweist, welches mit einem ersten Außenring (52), welcher drehfest mit dem Ring (11) verbunden ist, und mit einem zweiten sich nicht drehenden Innenring (54) versehen ist, der das sich nicht drehende Organ (51) darstellt, welches mit dem Dämpfungsmittel (30) fest verbunden ist, wobei die Wälzkörper (53) zwischen dem ersten Ring (52) und dem zweiten Innenring (54) angeordnet sind.

3. Dämpfungsvorrichtung nach einem der Ansprüche 1 bis 2,
**dadurch gekennzeichnet, dass** das Dämpfungsmittel (30) mindestens ein viskoelastisches Organ (31, 32) aufweist.

4. Dämpfungsvorrichtung nach einem der Ansprüche 1 bis 3,
**dadurch gekennzeichnet, dass** das Dämpfungsmittel (30) mindestens einen Dämpfungskranz (31, 32) aufweist, wobei der Kranz (31, 32) zwischen dem Zwischenglied (50) und dem sich nicht drehenden Befestigungsmittel (40) angeordnet ist.

5. Dämpfungsvorrichtung nach Anspruch 4,
**dadurch gekennzeichnet, dass** der Kranz (31, 32) parallel zu dem Ring (11) angeordnet ist.

6. Dämpfungsvorrichtung nach einem der Ansprüche 4 bis 5,
**dadurch gekennzeichnet, dass** das Dämpfungsmittel (30) einen oberen Kranz (31) und einen unteren Kranz (32) aufweist, die in Seitenansicht zu beiden Seiten des Rings (11) angeordnet sind, wobei der obere Kranz (31) direkt über dem Ring (11) angeordnet ist.

7. Dämpfungsvorrichtung nach einem der Ansprüche 1 bis 6,
**dadurch gekennzeichnet, dass** mindestens eine mechanische Verbindung (20) einen radial vorstehenden Arm (11') des Rings (11) aufweist.

8. Dämpfungsvorrichtung nach einem der Ansprüche 1 bis 7,
**dadurch gekennzeichnet, dass** mindestens eine mechanische Verbindung (20) eine an dem Ring (11) angelenkte Antriebsstange (21) und ein Schwingelement (22) aufweist, welches an der Antriebsstange (21) und an dem ersten Ende (12') des Hebels (12) angelenkt ist.

9. Rotor (2) mit einer Nabe (3), die eine Mehrzahl von Rotorblättern (4) drehbeweglich um eine senkrechte Drehachse (AX) trägt, wobei die Rotorblätter über Gelenke, die in einer Befestigungsebene (P1) angeordnet sind, an der Nabe angelenkt sind,
**dadurch gekennzeichnet, dass** der Rotor (2) eine Dämpfungsvorrichtung (10) nach einem beliebigen der Ansprüche 1 bis 8 aufweist, die mit einem sich um die Drehachse (AX) drehenden Ring (11) und einem Hebel (12) pro Rotorblatt (4) versehen ist, wobei jeder Hebel (12) sich von einem ersten Ende (12'), welches mit dem Ring (11) über eine erste mechanische Verbindung (20) verbunden ist, auf ein zweites Ende (12") zu erstreckt, welches an einem Rotorblatt angelenkt ist, wobei die Dämpfungsvorrichtung ein Dämpfungsmittel (30) aufweist, welches sich nicht um die Drehachse (AX) dreht und mit einem Befestigungsmittel (40) fest verbunden ist, welches sich nicht dreht, sowie mit einem sich nicht drehenden Organ (51) eines Zwischengliedes (50), wobei das Zwischenglied (50) zwischen dem Dämpfungsmittel (30) und dem Ring (11) angeordnet ist, um eine schleppende Drehbewegung mindestens eines Rotorblatts (4) in eine Translationsbewegung umzuwandeln, mit der das Dämpfungsmittel (30) beaufschlagt wird.

10. Rotor nach Anspruch 9,
**dadurch gekennzeichnet, dass** der Ring (11) parallel zur Befestigungsebene (P1) verläuft.

11. Rotor nach einem der Ansprüche 9 bis 10,
**dadurch gekennzeichnet, dass** die Nabe (3) eine obere Platte (3") und eine untere Platte (3') aufweist zum Tragen der Rotorblätter (4) in der Befestigungsebene (P1), wobei der Ring (11) in der Befestigungsebene (P1) angeordnet ist.

12. Rotor nach Anspruch 9,
**dadurch gekennzeichnet, dass** das Dämpfungsmittel auf der Drehachse (AX) des Rotors zentriert ist.

13. Luftfahrzeug (1) mit einem Rumpf (6) und einem Rotor (2), der mit einer Nabe (3) versehen ist, die eine Mehrzahl von Rotorblättern (4) drehbeweglich um eine senkrechte Drehachse (AX) trägt, wobei die Rotorblätter an der Nabe über Gelenke angelenkt sind, die in der Befestigungsebene (P1) angeordnet sind, **dadurch gekennzeichnet, dass** der Rotor (2) eine Dämpfungsvorrichtung (10) nach irgendeinem der Ansprüche 1 bis 8 aufweist, die mit einem sich um die Drehachse (AX) drehenden Ring (11) und einem Hebel (12) pro Rotorblatt (4) versehen ist, wobei jeder Hebel (12) sich von einem ersten Ende (12'), welches über eine erste mechanische Verbindung (20) mit dem Ring (11) verbunden ist, auf ein zweites Ende (12") zu erstreckt, welches an einem Rotorblatt (4) angelenkt ist, wobei die Dämpfungsvorrichtung (10) ein Dämpfungsmittel (30) aufweist, welches sich nicht dreht und an einem sich nicht drehenden Befestigungsmittel (40) befestigt ist, welches an dem Rumpf (6) befestigt ist, und an einem sich nicht drehenden Organ (51) eines Zwischenglieds (50), wobei das Zwischenglied (50) zwischen dem Dämpfungsmittel (30) und dem Ring (11) angeordnet ist, um eine schleppende Drehbewegung mindestens eines Rotorblatts (4) in eine Translationsbewegung in einer Ebene parallel zur Befestigungsebene (P1) umzuwandeln.

14. Luftfahrzeug nach Anspruch 13,
**dadurch gekennzeichnet, dass** der Rumpf (6) ein Leistungsgetriebe (5) aufweist, welches die Nabe (3) zu einer Drehbewegung um die Drehachse (AX) antreibt, wobei das Befestigungsmittel (40) eine Stützstrebe (41) aufweist, die an einem Gehäuse (5') des Leistungsgetriebes (5) befestigt ist.

## Claims

1. A damping device (10) of a rotor (2) provided with a rotary ring (11) and a plurality of levers (12), each lever (12) extending from a first end (12') which is connected to said ring (11) by a first mechanical connection (20) towards a second end (12") suitable for being articulated to a blade (4),
**characterised in that** said damping device (10) comprises a non-rotating damping means (30) secured to a non-rotating fastening means (40) and to a non-rotating member (51) of an interface (50), said interface (50) being interposed between said non-rotating damping means (30) and said ring (11) in order to convert a rotary lead-lag movement of a blade (4) which is transmitted to a lever (12) into a translational movement acting on said damping means (30).

2. A damping device according to Claim 1, **characterised in that** said interface (50) comprises a rolling bearing provided with a first cage (52) integral in rotation with said ring (11), and with a second, non-rotating, cage (54) which represents said non-rotating member (51) integral with said damping means (30), rolling members (53) being arranged between said first cage (52) and said second cage (54).

3. A damping device according to any one of Claims 1 to 2, **characterised in that** this said damping means (30) comprises at least one viscoelastic member (31, 32).

4. A damping device according to any one of Claims 1 to 3, **characterised in that** said damping means (30) comprises at least one damping crown (31, 32), said crown (31, 32) being arranged between said interface (50) and said non-rotating fastening means (40).

5. A damping device according to Claim 4, **characterised in that** said crown (31, 32) is parallel to said ring (11).

6. A damping device according to any one of Claims 4 to 5, **characterised in that** said damping means (30) comprises an upper crown (31) and a lower crown (32) which are arranged on either side of said ring (11) in elevation, said upper crown (31) being directly above said ring (11).

7. A damping device according to any one of Claims 1 to 6, **characterised in that** at least one mechanical connection (20) comprises an arm (11') which projects radially from said ring (11).

8. A damping device according to any one of Claims 1 to 7, **characterised in that** at least one mechanical connection (20) comprises a connecting-rod (21) articulated to said ring (11) and a rocker member (22) articulated to said connecting-rod (21) and to the first end (12') of a lever (12).

9. A rotor (2) provided with a hub (3) bearing a plurality of blades (4) rotating about an axis of rotation (AX) in elevation, the blades being articulated to the hub by articulations arranged in a fastening plane (P1),
**characterised in that** said rotor (2) includes a damping device (10) according to any one of Claims 1 to 8 provided with a ring (11) which rotates about said axis of rotation (AX) and with one lever (12) per blade (4), each lever (12) extending from a first end (12') which is connected to said ring (11) by a first mechanical connection (20) towards a second end (12") which is articulated to a blade, said damping device comprising a damping means (30) which does not rotate about said axis of rotation (AX) and which is secured to a non-rotating fastening means (40) and to a non-rotating member (51) of an interface (50), said interface (50) being interposed between said damping means (30) and said ring (11) in order to convert a rotary lead-lag movement of at least one blade (4) into a translational movement acting on said damping means (30).

10. A rotor according to Claim 9, **characterised in that** said ring (11) is parallel to said fastening plane (P1).

11. A rotor according to any one of Claims 9 to 10, **characterised in that**, said hub (3) comprising an upper plate (3") and a lower plate (3') to bear the blades (4) in the fastening plane (P1), said ring (11) is arranged in said fastening plane (P1).

12. A rotor according to Claim 9, **characterised in that** said damping means is centred on the axis of rotation (AX) of said rotor.

13. An aircraft (1) comprising an airframe (6) and a rotor (2) provided with a hub (3) bearing a plurality of blades (4) rotating about an axis of rotation (AX) in elevation, the blades being articulated to the hub by articulations arranged in a fastening plane (P1),
**characterised in that** said rotor (2) includes a damping device (10) according to any one of Claims 1 to 8 which is provided with a ring (11) which rotates about said axis of rotation (AX) and with one lever (12) per blade (4), each lever (12) extending from a first end (12') which is connected to said ring (11) by a first mechanical connection (20) towards a second end (12") which is articulated to a blade (4), said damping device (10) comprising a non-rotating damping means (30) which is secured to a non-rotating fastening means (40) fastened to said airframe (6) and to a non-rotating member (51) of an interface (50), said interface (50) being interposed between said damping means (30) and said ring (11) in order to convert a rotary lead-lag movement of at least one blade (4) into a translational movement in a plane parallel to the fastening plane (P1).

14. An aircraft according to Claim 13, **characterised in that** said airframe (6) comprises a power transmission gearbox (5) which drives said hub (3) in rotation about said axis of rotation (AX), said fastening means (40) comprising a rod member (41) fastened to a casing (5') of said power transmission gearbox (5).
